# EUROPEAN PATENT APPLICATION

(11) **EP 4 524 762 A1**
(43) Date of publication of application: **19.03.2025**
(21) Application number: 23822986.8
(22) Date of filing: 06.06.2023
(51) Int. Cl.: G06F 15/177

(54) **PROCESSOR, METHOD FOR DATA PROCESSING, DEVICE, AND STORAGE MEDIUM**

(30) Priority: 14.06.2022 CN 202210674851
(71) Applicant: BEIJING YOUZHUJU NETWORK TECHNOLOGY CO. LTD., Beijing 101299 (CN)
(72) Inventor: CAO, Yuhui, Beijing 100028 (CN); SHI, Yunfeng, Beijing 100028 (CN); WANG, Jian, Beijing 100028 (CN)
(74) Representative: Dentons UK and Middle East LLP
(86) International application number: PCT/CN2023/098714
(87) International publication number: WO 2023/241417

(57) **Abstract**

According to an embodiment of the disclosure, a processor and a method, device and storage medium for data processing are provided. The processor includes a plurality of processor cores, each of the plurality of processor cores including a data cache for reading and writing data and an instruction cache for reading instructions, the instruction cache being separate from the data cache. The processor also includes a distributor communicatively coupled to the plurality of processor cores. The distributor is configured to distribute to-be-processed data to a respective data cache of at least one processor core of the plurality of processor core, and distribute instructions associated with the to-be-processed data to a respective instruction cache of the at least one processor core for processing. In this way, the efficiency of data transmission and vector computation can be significantly improved.

## Description

**The** present application claims priority to Chinese Patent Application No. 202210674851.9, filed on June 14, 2022, entitled "PROCESSOR AND METHOD, DEVICE, AND STORAGE MEDIUM FOR DATA PROCESSING," the entirety of which is incorporated herein by reference.

### FIELD

Example embodiments of the present disclosure generally relate to the field of computers, and in particular, to a processor and a method, device and computer-readable storage medium for data processing.

### BACKGROUND

With the development of information technologies, various data processing services put forward and higher requirements on computing power and computing resources of computing system. Currently, a multi-core processor has been proposed to improve the overall computing power and computing throughput of the system in parallel computing. For vector computations with high instruction repeatability and large data volume, how to make full use of limited bandwidth by multi-core processors to handle such vector computations is a concerning problem.

### SUMMARY

**In** a first aspect of the present disclosure, a processor is provided. The processor includes a plurality of processor cores, each of the plurality of processor cores including a data cache for reading and writing data and an instruction cache for reading instructions, the instruction cache being separate from the data cache. The processor also includes a distributor communicatively coupled to the plurality of processor cores. The distributor is configured to distribute to-be-processed data to a respective data cache of at least one processor core of the plurality of processor cores; and distribute instructions associated with the to-be-processed data to a respective instruction cache of the at least one processor core for processing.

**In** a second aspect of the present disclosure, a method for data processing is provided. The method includes distributing, by a distributor of a processor, to-be-processed data to a respective data cache of at least one of a plurality of processor cores of the processor. The distributor is communicatively coupled to the plurality of processor cores. The method also includes distributing instructions associated with the to-be-processed data to a respective instruction cache of the at least one processor core for processing.

**In** a third aspect of the present disclosure, an electronic device is provided. The electronic device includes at least the processor according to the first aspect.

**In** a fourth aspect of the present disclosure, a computer-readable storage medium is provided. The computer-readable storage medium stores a computer program, and the computer program is executable by the processor to implement the method of the second aspect.

**It** should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a schematic diagram of an architecture for instruction and data distribution according to some embodiments of the present disclosure;
FIG. 3 illustrates a schematic diagram for broadcasting instructions to a plurality of processor cores according to some embodiments of the present disclosure;
FIG. 4 illustrates a schematic diagram of cyclically writing, executing, and reading data by a processor core according to some embodiments of the present disclosure;
FIG. 5 shows a flowchart of a process for data processing according to some embodiments of the present disclosure; and
FIG. 6 illustrates a block diagram of an electronic device in which a processor may be included in accordance with one or more embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definition may also be included below.

It may be understood that the data involved in the technical solution (including but not limited to the data itself, the acquisition or use of the data) should follow the requirements of the corresponding laws and regulations and related regulations.

As described above, with the development of information technologies, various data processing services put forward and higher requirements on computing power and computing resources of computing system. Currently, a multi-core processor has been proposed to improve the overall computing power and computing throughput of the system in parallel computing. In general, each processor core of a multi-core processor is an independent and complete instruction execution unit. When multiple processor cores work together, for example, when multiple processor cores need to access the same memory address, it is possible to issue an instruction or a data conflict problem.

One conventional approach is to use mailbox (mailbox) policies for instructions for the above instruction or data conflict problem. For example, when a plurality of processor cores need to synchronously perform an operation, an instruction is transmitted through a mailbox. For data, a conventional solution is to use a cache (Cache) coherence policy, such as a modified exclusive shared invalidate (MESI) technique, to ensure that the data in the cache is the same as the data in the main memory. The multi-core processor architecture using the conventional policy described above has a big.LITTLE architecture or the like.

Studies have found that for some vector computations with high instruction repeatability and large data volume, a single instruction multiple data (SIMD) processor of a multi-core architecture is often used. On the one hand, if a conventional cache consistency based multi-core processor architecture is used, the L1 cache of the SIMD processor is smaller. In addition, due to the large amount of computing data and poor locality, a large amount of cache misses can be generated, resulting in low efficiency of reading and writing data. On the other hand, such regular vector computations rarely require complex thread switching tasks that appear bulky and redundant.

In summary, for vector calculation with high instruction repeatability and large data volume, how to make full use of limited bandwidth by a multi-core processor to process such vector calculation is a concern.

According to an embodiment of the present disclosure, an improved solution for a processor is provided. In this scheme, a distributor is provided in the processor for distributing data and/or instructions to the various processor cores of the processor. By using a distributor to centrally schedule the distribution of data and/or instructions without using conventional cache coherency designs, many cache coherency problems of multi-core processors are avoided.

On the one hand, conventional cache consistency-based processors, data transfer, and processing complexity tend to be high, resulting in limited data storage capacity and difficulty in increasing clock frequency. According to the scheme, data is distributed to the data cache of each processor core by the distributor, and the data cache of each processor core is used for reading and writing data. By using the data cache of each processor core to directly transmit data with the distributor, a large-capacity data cache can be used, and external data exchange is reduced as much as possible.

**On** the other hand, a traditional multi-core scheduling mode usually actively initiates a data transmission request by a processor, and a single processor cannot know data requests of other processors, so it is difficult to be compatible with the form of data broadcast. That is, the data cannot be transmitted in a broadcast form. According to the scheme, the centralized data scheduling mechanism is used, the broadcast mode can be easily applied to transmit data, and then the data transmission efficiency is improved. In this way, the solution can fully utilize limited bandwidth resources, thereby improving the efficiency of vector calculation, especially neural network vector calculation.

Some example embodiments of the present disclosure will be described below with continued reference to the accompanying drawings.

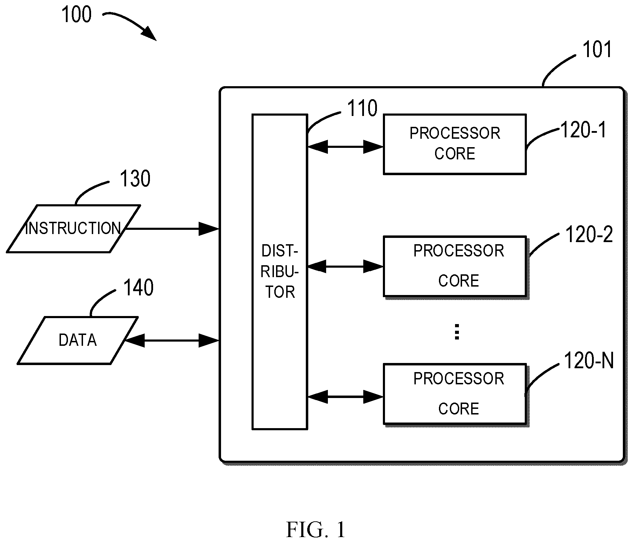

FIG. 1 illustrates a schematic diagram of an example environment 100 in which embodiments of the present disclosure can be implemented. In this example environment 100, the processor 101 is a multi-core processor that includes a processor core 120-1, a processor core 120-2, ···, a processor core 120-N, where N is an integer greater than 1· For ease of discussion, processor cores 120-1, processor cores 120-2,···, processor cores 120-N are collectively or individually referred to hereinafter as processor core(s) 120.· Each processor core 120 may be a SIMD processor core. In some embodiments, the processor 101 may include four processor cores 120 (i.e., the value of N may be 4).

Of course, it should be understood that any specific value appearing herein and elsewhere herein is exemplary, unless specifically stated. For example, in other embodiments, for example, different numbers of processor cores 120 may be provided according to different indicators such as process levels and line widths of the flow slices.

The processor 101 also includes a distributor 110. The distributor 110 is communicatively coupled to each processor core 120. That is, the distributor 110 and each processor core 120 may communicate with each other according to appropriate data transfer protocols and/or standards. In operation, distributor 110 may distribute data 140 and/or instructions 130 to each processor core 120. Note that the distributor 110 may also sometimes be referred to as a "scheduler", both of which may be used interchangeably in this context.

In some embodiments, the distributor 110 may be implemented as a hardware circuit. The hardware circuitry may be integrated or embedded into the processor 101. Alternatively, or additionally, the distributor 110 may also be implemented in whole or in part by a software module, such as implemented as executable instructions and stored in a memory (not shown).

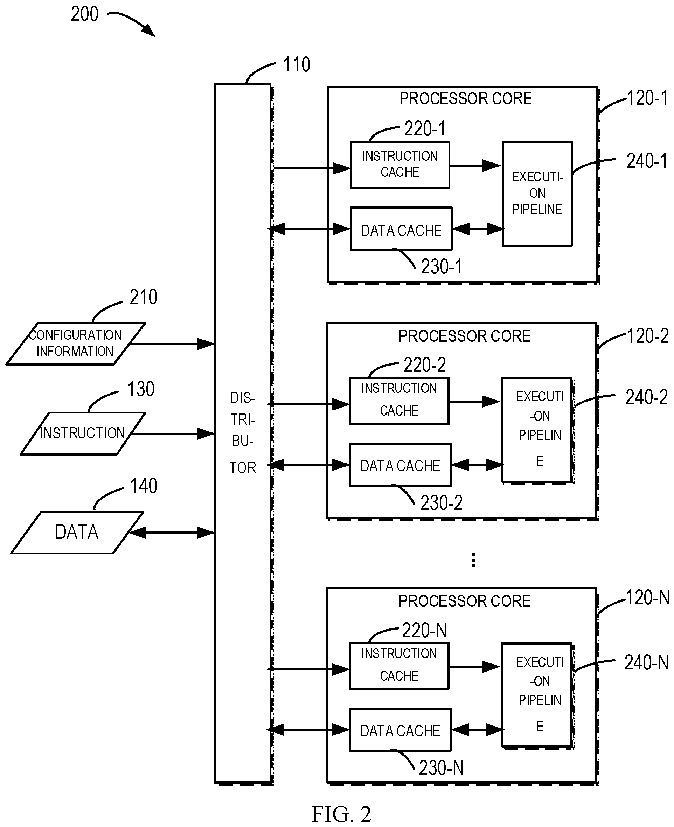

The distributor 110 is configured to distribute instructions 130 and/or data 140 received by the processor 101 from other devices (not shown) in the environment 100 to the various processor cores 120. Devices that send instructions 130 and/or data 140 to the distributor 110 are also referred to as initiating devices for data processing requests. In some embodiments, the processor 101 may receive data 140 and/or instructions 130 transmitted by a storage device or other external device in the environment 100 via, for example, a bus, and distribute the received data 140 and/or instructions 130 to the various processor cores 120 via the distributor 110. The distribution process for data 140 and/or instructions 130 will be described below in connection with FIG. 2.

It should be understood that the structure and function of the environment 100 is described for exemplary purposes only and does not imply any limitation to the scope of the present disclosure. For example, the processor 101 may be applied in a variety of existing or future computing platforms or computing system. The processor 101 may be implemented in various embedded applications (e.g., data processing systems such as mobile network base stations, etc.) to provide services such as a large number of vector computations. The processor 101 may also be integrated or embedded in various electronic devices or computing devices to provide various computing services. An application environment and an application scenario of the processor 101 are not limited herein.

FIG. 2 illustrates a schematic diagram of an example architecture 200 for instruction 130 and data 140 distribution, in accordance with some embodiments of the present disclosure. For ease of discussion, architecture 200 will be described with reference to environment 100 of FIG. 1.

As shown in FIG. 2, the plurality of processor cores 120 each include a data cache for reading and writing data and an instruction cache for reading instructions separate from the data cache. For example, processor core 120-1 includes instruction cache 220-1 and data cache 230-1; processor core 120-2 includes instruction cache 220-2 and data cache 230-2;···; processor core 120-N includes instruction cache 220-N and data cache 230-N· For ease of discussion, instruction cache 220-1, instruction cache 220-2,···, instruction cache 220-N are collectively or individually referred to hereinafter collectively or individually as instruction cache 220, and data cache 230-1, data cache 230-2,···, data cache 230-N are collectively or individually referred to as or individually referred to as data cache 230·

Note that instruction cache 220 is not typically implemented as a cache. From the perspective of the processor 101, the instruction cache 220 is read-only. The data cache 230 may include a Vector Closely-coupled Memory (VCCM). Similar to instruction cache 220, data cache 230 is also typically not implemented as a cache. However, unlike the instruction cache 220, the data cache 230 is readable and writable. By using VCCM as data cache 230 instead of employing a cache, the design complexity of processor 101 may be reduced and processor cache capacity and clock frequency increased. In this way, the data transmission efficiency of the processor 101 can be improved.

In some embodiments, the distributor 110 is configured to distribute the received instructions 130 and/or data 140 to at least one processor core 120 of the plurality of processor cores 120. For example, the distributor 110 may be configured to distribute the received instructions 130 and/or data 140 to only the first processor core 120-1. As another example, the distributor 110 may distribute the received instructions 130 and/or data 140 to the first processor core 120-1 and the second processor core 120-2. Alternatively, the distributor 110 may distribute the instructions 130 and/or data 140 to each of the plurality of processor cores 120. In some embodiments, the distributor 110 may receive configuration information 210. The configuration information 210 may instruct the distributor 110 to distribute the instructions 130 and/or data 140 to some or some of the plurality of processor cores 120. For example, configuration information 210 may instruct distributor 110 to distribute instructions 130 and/or data 140 to only first processor core 120-1. As another example, the configuration information 210 may instruct the distributor 110 to distribute the instructions 130 and/or data 140 to each of the plurality of processor cores 120. Alternatively, or additionally, distributor 110 may be preset to distribute instructions 130 and/or data 140 to some or some processor cores 120, or to all processor cores 120.

In some embodiments, the distributor 110 may receive a set of data and a set of instructions to be processed by the processor 101. The configuration information 210 received by the distributor 110 may indicate at least the association between the data to be processed in the data set (also referred to as data 140) and the instructions 130 in the instruction set. For example, the association between data 140 and instruction 130 may indicate that data 140 in the data set is to be processed according to instructions 130 in the instruction set. The distributor 110 may distribute the data 140 and the instructions 130 depending at least in part on the association. For example, the distributor 110 distributes the data 140 to respective data caches 230 of at least one of the plurality of processor cores 120 and distributes instructions 130 associated with the data 140 to respective instruction caches 220 of the at least one processor core 120 for processing.

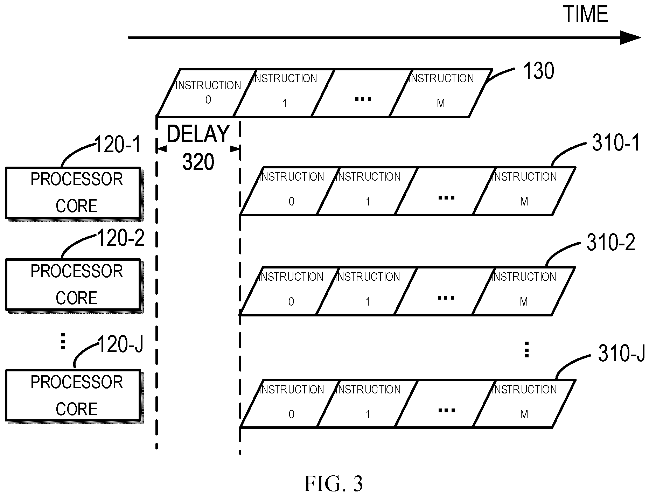

In some embodiments, the distributor 110 may broadcast the same instructions 130 to at least one processor core. FIG. 3 illustrates a schematic diagram for broadcasting the instructions 130 to a plurality of processor cores according to some embodiments of the present disclosure. As shown in FIG. 3, the instructions 130 may include instruction 0, instruction 1,···, instruction M (where M is an integer greater than or equal to 1)· The instructions 130 may be broadcast to the processor cores 120-1, 120-2,···, 120-J (where J is an integer greater than 1) via the distributor 110· For example, the instruction 310-1, instruction 310-2, ....., instruction 310-J same with the instructions 130 are broadcasted to the processor cores 120-1, 120-2,···, 120-J. For ease of discussion, the instruction 310-1, instruction 310-2, ......, instruction 310-J may be collectively or individually referred to as the instruction 310 hereinafter. It should be understood that there may be a delay 320 between receiving the instruction 310 at the processor core 120 and the time at which the instruction 130 is received at the distributor 110.

It should be understood that while instructions 130 are shown in FIG. 3 as being broadcast to processor cores 120-1, 120-2, ···, 120-J, in some embodiments, distributor 110 may broadcast instructions 130 only to more or fewer processor cores 120 in multiple processor cores 120· For example, the distributor 110 may broadcast the instructions 130 only to one processor core 120. As another example, distributor 110 may broadcast instructions 130 to all processor cores 120 (i.e., J equals to N). The distributor 110 broadcast the instructions 130 to which processor core 120 or which processor cores 120 may be preset or set based on the received configuration information 210.

Alternatively, in some embodiments, the distributor 110 may also use other transmission modes to distribute the instructions 130 to respective processor cores 120. For example, the distributor 110 may first send the instruction 130 to the processor core 120-1, then send the instruction 130 to the processor core 120-2, and so on. Compared with the sequential distribution mode, the broadcast mode distribution instruction can reduce the overhead of repeatedly reading the instruction, thereby greatly saving the instruction transmission overhead.

In an example in which the same instruction is broadcast to each processor core, the distributor 110 may send different to-be-processed data associated with the instruction to different processor cores 120, respectively. For example, the distributor 110 may broadcast or send first data in the data 140 to the first processor core 120-1 for processing, and broadcast or send second data in the data 140 different from the first data to the second processor core 120-2 for processing.

This arrangement would be beneficial. For example, in many computing scenarios such as neural network reasoning, there are a large amount of scenarios that use the same instruction to calculate different data, and in such scenarios, broadcasting the same instruction and different data to different processor cores 120 in a broadcast manner can greatly save instruction and data transmission overheads, thereby improving data processing efficiency.

It should be understood that although only an example of broadcast the same instruction 130 to each processor core 120 is shown in FIG. 3, in some embodiments, a process similar to FIG. 3 may also be used to broadcast the same data to each processor core 120. For example, data 140 may be broadcast to at least one processor core 120 of the plurality of processor cores 120. In such an example, different instructions associated with data 140 may be distributed to different processor cores 120. For example, a first instruction in the instruction 130 may be sent or broadcast to the processor core 120-1 to process the data 130 based on the first instruction by the processor core 120 and a second instruction in the instruction 130 to the processor core 120-2 to process the data 140 by the processor core 120-2 based on the second instruction.

This way of distributing the same data and different instructions to each processor core 120 is applicable to many data processing scenarios, such as a data processing process with a small amount of data but complex processing. For example, a scenario in which different computation flows are used for the same data often occurs in neural network computation. The manner described above for distributing the same data and different instructions to each processor core 120 can be well suited for such scenarios. In this way, overheads of such data and instruction transmission processes can be greatly reduced, thereby improving data processing efficiency.

With continued reference to FIG. 2, each processor core 120 is configured to execute instructions according to execution pipelines 240-1, 240-2, ···, pipeline 240-N associated therewith. · For ease of discussion, the execution pipeline 240-1, execution pipeline 240-2,···, execution pipelines 240-N are collectively or individually referred to as execution pipeline(s) 240 hereinafter. · The execution pipeline 240 is configured to process data in the data cache 230 with instructions in the instruction cache 220. For example, the execution pipeline 240 may process the data written into the data cache 230 based on the instruction in the instruction cache 220, and send the processed result back to the data cache 230. Alternatively, or additionally, each processor core 120 may send processed results from the data cache 230 to the distributor 110.

In some embodiments, the distributor 110 may receive the processed results from respective data caches 230 of the at least one processor core 120, respectively. Additionally, the distributor 110 may send the processed result of the received to-be-processed data to another device, such as an initiating device of the data processing request. In this manner, the distributor 110 may be responsible for the exchange of external data with the data in the data cache 230 in the processor core 120, thereby reducing the external data exchange by the processor core 120.

In some embodiments, distributor 110 may distribute instructions 130 and data 140 associated with the instructions to each processor core 120. Each processor core 120 may process the received data 140 according to the instruction 130, and send the processed result to the distributor 110.

In some embodiments, the distributor 110 may read and write data to the data cache 230 in a cyclic manner. For example, the distributor 110 may distribute the third data in the to-be-processed data (e.g., the data 140) to the first processor core 120-1 in the at least one processor core 120 for processing. The distributor 110 distributes the fourth data different from the third data in the to-be-processed data to the first processor core 120-1 in response to receiving the first result obtained by processing the third data from the processor core 120-1.

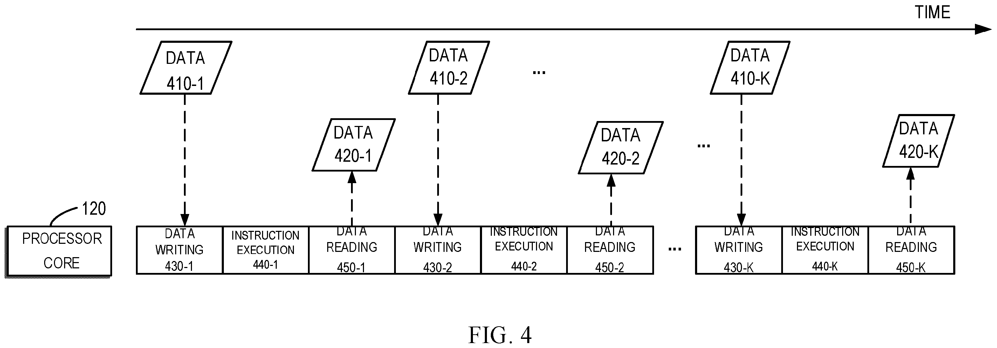

FIG. 4 illustrates a schematic diagram of cyclically writing data, executing instructions, and reading data by a processor core 120 according to some embodiments of the present disclosure. As shown in FIG. 4, distributor 110 sends data 410-1 to processor core 120. Processor core 120 writes data 410-1 to data write 430-1 to write data 410-1 to data cache 230. Processor core 120 executes 440-1 with instructions, such as execution pipeline 240 shown in FIG. 2, in accordance with the received instructions associated with data 410-1. Processor core 120 in turn performs data read 450-1 from data cache 230 as a result of instruction execution 440-1. The processor core 120 sends the read data 420-1 to the distributor 110.

In response to receiving data 420-1 from processor core 120, distributor 110 sends data 410-2 to processor core 120. The processor core 120 in turn performs processes such as data writing 430-2, instruction execution 440-2 and data reading 450-2 on the data 410-2, and sends the read data 420-2 corresponding to the processed result of the data 410-2 to the distributor 110.

Similarly, in response to receiving a previous data processed result from processor core 120, distributor 110 may send data 410-K (where K may be an integer greater than 1) to processor core 120. The processor core 120 in turn performs processes such as data writing 430-K, instruction execution 440-K, and data reading 450-K on the data 410-K, and sends the read data 420-K corresponding to the processed result of the data 410-K to the distributor 110. The instructions associated with the data 410-1, 410-2,···, 410-K may be the same instruction, which may be transmitted only once to the processor core 120 by the distributor 110· In some embodiments, the number K of cycles read and write and process data may be preset. Alternatively or additionally, the number K of cycles read and write and process data may be set according to the configuration information 210 received by the distributor 110.

It should be understood that although only a process of reading and writing and processing data of one processor core 120 is shown in FIG. 4, for other processor cores 120, a similar process may be used to cyclically read and write and process data. This loop manner facilitates loading a large amount of data into the data cache 230 of the processor core 120. In this way, only the instruction may be distributed once, and the data transmission overhead may be further reduced by using the process of recycling and writing and processing the data associated with the instruction.

It should be appreciated that the various data distribution, instruction distribution, etc. processes described above may be performed in any suitable order unless expressly indicated otherwise. Embodiments of the various data, instruction distribution, and embodiments of various read and write and processing data described above may be combined.

Various embodiments employing a distributor 110 to distribute instructions and/or data to individual processor cores 120 are described above in connection with FIGS. 2-4. By adopting the embodiment of the invention, on one hand, the data is distributed to the data cache of each processor core by the distributor, the data cache of each processor core and the distributor directly transmit data, so that each processor core can use a large-capacity data cache, and the external data exchange of the processor core is reduced as much as possible.

On the other hand, embodiments of the present solution use a centralized data scheduling or distribution mechanism to easily apply a broadcast manner to transmit data and/or instructions, thereby improving transmission efficiency of data and instructions. In this way, this solution can fully utilize limited bandwidth resources, thereby improving efficiency such as vector calculation.

For computations such as neural network training and/or inference, the bandwidth required by the underlying computing unit tends to be several times or even tens of times the externally accessible bandwidth. According to the scheme, limited bandwidth resources can be fully utilized, so that the calculation efficiency such as a neural network accelerator is improved.

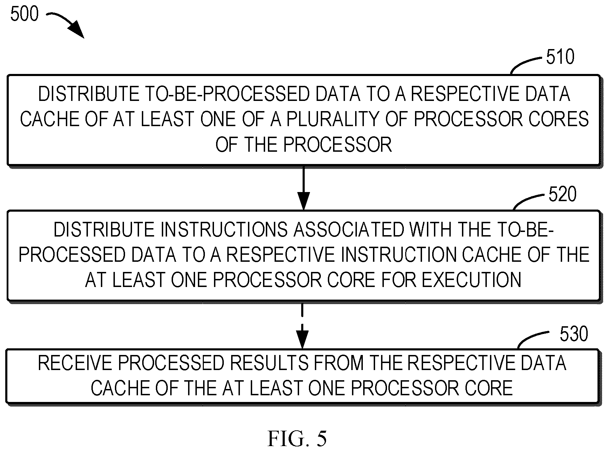

FIG. 5 shows a flowchart of a process 500 for data processing according to some embodiments of the present disclosure. The process 500 may be implemented at the distributor 110 of the processor 101. For ease of discussion, the process 500 will be described with reference to the environment 100 of FIG. 1.

At block 510, the distributor 110 distributes to-be-processed data (e.g., data 140) to a respective data cache 230 of at least one of the plurality of processor cores 120. For example, the distributor 110 may distribute the data 140 to each of the plurality of processor cores 120 or to one or more of the plurality of processor cores 120. At block 520, the distributor 110 distributes an instruction 130 associated with the to-be-processed data (e.g., data 140) to a respective instruction cache 220 of the at least one processor core 120 for processing. For example, the distributor 110 may distribute the instruction 130 to one or more of the plurality of processor cores 120 or to one or more of the plurality of processor cores 120.

In some embodiments, distributor 110 may distribute instructions 130 to at least one processor core 120 by broadcasting instructions 130 to at least one processor core 120. In such examples, the distributor 110 may send the first data in the data 140 to the first processor core 120-1 in the at least one processor core 120 for processing, and send the second data in the data 140 different from the first data to the second processor core 120-2 in the at least one processor core 120 for processing.

Additionally, or alternatively, in some embodiments, the distributor 110 may distribute the data 140 to the at least one processor core 120 by broadcasting the data 140 to the at least one processor core 120. In such examples, the distributor 110 may send a first instruction in the instruction 130 to the first processor core 120-1 in the at least one processor core 120 to process the data 140 based on the first instruction by the first processor core 120-1. The distributor 110 may also send a second instruction in the instruction 130 different from the first instruction to the second processor core 120-2 in the at least one processor core 120 to process the data 140 based on the second instruction by the second processor core 120-2.

In some embodiments, at block 530, the distributor 110 is further configured to receive processed results from the respective data cache 230 of the at least one processor core 120, respectively. The processed result is obtained by the at least one processor core 120 processing the received data 140 based on the instruction 130, respectively. For example, the distributor 110 may distribute the third data in the data 140 to the first processor core 120-1 in the at least one processor core 120 for processing. The distributor 110 distributes the fourth data in the data 140 different from the third data to the first processor core 120-1 for processing in response to receiving the first result obtained by processing the third data from the first processor core 120-1.

In some embodiments, the distributor 110 is further configured to receive a data set and an instruction set to be processed by the processor 101. The distributor 110 is further configured to receive configuration information. The configuration information indicates at least an association between to-be-processed data (e.g., data 140) in the data set and instructions 130 in the instruction set. For example, an association between data 140 and instruction 130 may represent that data 140 is to be processed by instruction 130. In such examples, the distribution of data 140 and instructions 130 may depend at least in part on the association described above.

It should be understood that while various steps are shown in a particular order in FIG. 5, some or all of these steps may be performed in other orders or in parallel. For example, block 510 in FIG. 5 may be performed before block 520, or may be performed after block 520. The scope of the present disclosure is not limited in this respect.

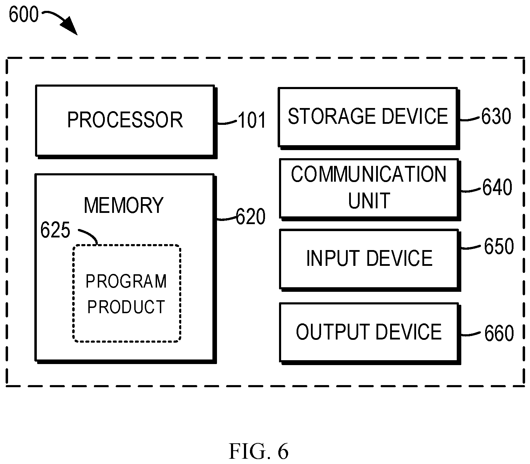

FIG. 6 shows a block diagram of an electronic device 600 in which a processor 101 according to one or more embodiments of the present disclosure may be included. It should be understood that the electronic device 600 illustrated in FIG. 6 is merely exemplary and should not constitute any limitation on the functionality and scope of the embodiments described herein.

As shown in FIG. 6, the electronic device 600 is in the form of a general-purpose electronic device or a computing device. Components of the electronic device 600 may include, but are not limited to, one or more processors 101, a memory 620, a storage device 630, one or more communication units 640, one or more input devices 650, and one or more output devices 660. In some embodiments, the processor 101 may perform various processes according to a program stored in the memory 620. Each processor core 120 in the processor 101 may execute computer-executable instructions in parallel to improve parallel processing capabilities of the electronic device 600.

Electronic device 600 typically includes a plurality of computer storage media. Such media may be any available media accessible to the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 630 may be a removable or non-removable medium and may include a machine-readable medium, such as a flash drive, magnetic disk, or any other medium, which may be capable of storing information and/or data (e.g., training data for training) and may be accessed within electronic device 600.

The electronic device 600 may further include additional removable / non-removable, volatile / non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interface. The memory 620 may include a computer program product 625 having one or more program modules configured to perform various methods or actions of various embodiments of the present disclosure. For example, these program modules may be configured to implement various functions or actions of the distributor 110.

The communication unit 640 implements communication with other electronic devices or computing devices through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network Node.

The input device 650 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., network card, modem, etc. ) that enables the electronic device 600 to communicate with one or more other electronic devices or computing devices. Such communication may be performed via an input / output (I / O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions / acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions / acts specified in the flowchart and/or block diagram block or blocks.

According to one or more embodiments of the present disclosure, Example 1 describes a processor including a plurality of processor cores. Each of the plurality of processor cores includes a data cache for reading and writing data and an instruction cache for reading instructions, the instruction cache being separate from the data cache . The processor also includes a distributor communicatively coupled to the plurality of processor cores. The distributor is configured to distribute to-be-processed data to a respective data cache of at least one processor core of the plurality of processor cores; and distribute instructions associated with the to-be-processed data to a respective instruction cache of the at least one processor core for processing.

According to one or more embodiments of the present disclosure, Example 2 includes the processor as described in Example 1, wherein distributing the instructions to the at least one processor core comprises broadcasting instructions to the at least one processor core.

According to one or more embodiments of the present disclosure, Example 3 includes the processor according to Example 2, wherein distributing the to-be-processed data to the at least one processor core comprises: sending first data in the to-be-processed data to the first processor core for processing; and sending second data in the to-be-processed data to the second processor core for processing. The second data is different from the first data.

According to one or more embodiments of the present disclosure, Example 4 includes the processor as described in Example 1, wherein distributing the data to be processed to the at least one processor core comprises broadcasting the data to be processed to the at least one processor core.

According to one or more embodiments of the present disclosure, Example 5 includes the processor as described in Example 4, wherein distributing the instruction to the at least one processor core comprises: sending a first instruction to the first processor core, so that the first processor core processes the to-be-processed data based on the first instruction; and sending a second instruction to the second processor core, so that the second processor core processes the to-be-processed data based on the second instruction. The first instruction is different from the second instruction.

According to one or more embodiments of the present disclosure, Example 6 includes the processor as described in Example 1, wherein the distributor is further configured to receive a processed result from a corresponding data cache of the at least one processor core. The processed result is obtained by the at least one processor core processing the received to-be-processed data based on the instruction.

According to one or more embodiments of the present disclosure, Example 7 includes the processor according to Example 6, wherein distributing the to-be-processed data to the at least one processor core comprises: distributing third data in the to-be-processed data to a first processor core in the at least one processor core for processing; and in response to receiving a first result obtained by processing the third data from the first processor core, distributing fourth data in the to-be-processed data to the first processor core for processing, the third data being different from the fourth data.

According to one or more embodiments of the present disclosure, Example 8 includes the processor as described in Example 1, wherein the distributor is further configured to: receive a set of data and a set of instructions to be processed by the processor; and receive configuration information. The configuration information indicates at least an association between the to-be-processed data in the set of data and the instruction in the set of instructions. The distribution of the to-be-processed data and the instructions is based at least in part on the association.

According to one or more embodiments of the present disclosure, Example 9 describes a method of data processing. The method includes distributing, by a distributor of a processor, to-be-processed data to a respective data cache of at least one of a plurality of processor cores of the processor. The distributor is communicatively coupled to the plurality of processor cores. The method also includes distributing instructions associated with the to-be-processed data to a respective instruction cache of the at least one processor core for processing.

According to one or more embodiments of the present disclosure, Example 10 includes the method described in Example 9, wherein distributing the instructions to the at least one processor core comprises broadcasting instructions to the at least one processor core.

According to one or more embodiments of the present disclosure, Example 11 includes the method according to Example 10, wherein distributing the to-be-processed data to the at least one processor core comprises: distributing first data in the to-be-processed data to the first processor core for processing; and distributing second data in the to-be-processed data to the second processor core for processing. The first data is different from the second data.

According to one or more embodiments of the present disclosure, Example 12 includes the method described in Example 9, wherein distributing the to-be-processed data to the at least one processor core comprises broadcasting the to-be-processed data to the at least one processor core

According to one or more embodiments of the present disclosure, Example 13 includes the method described in Example 12, wherein distributing the instruction to the at least one processor core comprises: sending a first instruction to the first processor core, so that the first processor core processes the to-be-processed data based on the first instruction; and sending a second instruction to the second processor core, so that the second processor core processes the to-be-processed data based on the second instruction. The first instruction is different from the second instruction.

According to one or more embodiments of the present disclosure, Example 14 includes the method described in accordance with Example 9. The method also includes receiving a processed result from a corresponding data cache of the at least one processor core. The processed result is obtained by the at least one processor core processing the received to-be-processed data based on the instruction, respectively.

According to one or more embodiments of the present disclosure, Example 15 includes the method described in Example 14, wherein distributing the to-be-processed data to the at least one processor core comprises: distributing third data in the to-be-processed data to a first processor core in the at least one processor core for processing; and in response to receiving a first result obtained by processing the third data from the first processor core, distributing fourth data in the to-be-processed data to the first processor core for processing. The third data is different from the fourth data.

According to one or more embodiments of the present disclosure, Example 16 includes the method described in accordance with Example 9. The method also includes receiving a set of data and a set of instructions to be processed by the processor; and receiving configuration information. The configuration information at least indicates an association between the to-be-processed data in the set of data and the instruction in the set of instructions. The distribution of the to-be-processed data and the instruction is based at least in part on the association.

According to one or more embodiments of the present disclosure, Example 17 describes an electronic device including at least the processor described according to any of Examples 1 to 8.

According to one or more embodiments of the present disclosure, Example 18 describes a computer-readable storage medium having a computer program stored thereon. The computer program is executed by a processor to implement the method according to any of Examples 9 to 16.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A processor comprising:
a plurality of processor cores, each of the plurality of processor cores including a data cache for reading and writing data and an instruction cache for reading instructions, the instruction cache being separate from the data cache; and
a distributor communicatively coupled to the plurality of processor cores and configured to:
distribute to-be-processed data to a respective data cache of at least one processor core of the plurality of processor cores; and
distribute instructions associated with the to-be-processed data to a respective instruction cache of the at least one processor core for processing.

2. The processor of claim 1, wherein distributing the instructions to the at least one processor core comprises:
broadcasting the instructions to the at least one processor core.

3. The processor of claim 2, wherein distributing the to-be-processed data to the at least one processor core comprises:
sending first data in the to-be-processed data to the first processor core for processing; and
sending second data in the to-be-processed data to the second processor core for processing, the second data being different from the first data.

4. The processor of claim 1, wherein distributing the to-be-processed data to the at least one processor core comprises:
broadcasting the to-be-processed data to the at least one processor core.

5. The processor of claim 4, wherein distributing the instructions to the at least one processor core comprises:
sending a first instruction to the first processor core, so that the first processor core processes the to-be-processed data based on the first instruction; and
sending a second instruction to the second processor core, so that the second processor core processes the to-be-processed data based on the second instruction, the first instruction being different from the second instruction.

6. The processor of claim 1, wherein the distributor is further configured to:
receive a processed result from a corresponding data cache of the at least one processor core, the processed result being obtained by respectively processing the received to-be-processed data based on the instruction by the at least one processor core.

7. The processor of claim 6, wherein distributing the to-be-processed data to the at least one processor core comprises:
distributing third data in the to-be-processed data to a first processor core of the at least one processor core for processing; and
in response to receiving a first result obtained by processing the third data from the first processor core, distributing fourth data in the to-be-processed data to the first processor core for processing, the third data being different from the fourth data.

8. The processor of claim 1, wherein the distributor is further configured to:
receive a set of data and a set of instructions to be processed by the processor; and
receive configuration information indicating at least an association between the to-be-processed data in the set of data and the instructions in the set of instructions,
wherein distribution of the to-be-processed data and the instructions is based at least in part on the association.

9. A method for data processing comprising:
distributing, by a distributor of a processor, to-be-processed data to a respective data cache of at least one processor core of a plurality of processor cores of the processor, the distributor communicatively coupled to the plurality of processor cores; and
distributing instructions associated with the to-be-processed data to a respective instruction cache of the at least one processor core for processing.

10. The method of claim 9, wherein distributing the instructions to the at least one processor core comprises:
broadcasting the instructions to the at least one processor core.

11. The method of claim 10, wherein distributing the to-be-processed data to the at least one processor core comprises:
distributing first data in the to-be-processed data to the first processor core for processing; and
distributing second data in the to-be-processed data to the second processor core for processing, the first data being different from the second data.

12. The method of claim 9, wherein distributing the to-be-processed data to the at least one processor core comprises:
broadcasting the to-be-processed data to the at least one processor core.

13. The method of claim 12, wherein distributing the instructions to the at least one processor core comprises:
sending a first instruction to the first processor core, so that the first processor core processes the to-be-processed data based on the first instruction; and
sending a second instruction to the second processor core, so that the second processor core processes the to-be-processed data based on the second instruction, the first instruction being different from the second instruction.

14. The method of claim 9, further comprising:
receiving a processed result from a corresponding data cache of the at least one processor core, the processed result being obtained by respectively processing the received to-be-processed data based on the instruction by the at least one processor core.

15. The method of claim 14, wherein distributing the to-be-processed data to the at least one processor core comprises:
distributing third data in the to-be-processed data to a first processor core of the at least one processor core for processing; and
in response to receiving a first result obtained by processing the third data from the first processor core, distributing fourth data in the to-be-processed data to the first processor core for processing, the third data being different from the fourth data.

16. The method of claim 9, further comprising:
receiving a set of data and a set of instructions to be processed by the processor; and
receiving configuration information indicating at least an association between the to-be-processed data in the set of data and the instructions in the set of instructions,
wherein distribution of the to-be-processed data and the instruction is based at least in part on the association.

17. An electronic device comprising at least the processor according to any of claims 1-8.

18. A computer-readable storage medium having a computer program stored thereon, the computer program being executed by a processor to implement the method of any of claims 9-16.
